(19) Europäisches Patentamt / European Patent Office / Office européen des brevets

(11) **EP 3 555 877 B1**

(12) **EUROPÄISCHE PATENTSCHRIFT**

(45) Veröffentlichungstag und Bekanntmachung des Hinweises auf die Patenterteilung:
**21.08.2024   Patentblatt 2024/34**

(21) Anmeldenummer: **17808062.8**

(22) Anmeldetag: **29.11.2017**

(51) Internationale Patentklassifikation (IPC):
**G08G 1/16** *(2006.01)*    **B60R 1/02** *(2006.01)*
**G01S 13/931** *(2020.01)*

(52) Gemeinsame Patentklassifikation (CPC):
**G08G 1/167;** B60R 2300/101; B60R 2300/70;
B60R 2300/802; G01S 2013/9315;
G01S 2013/9324; G01S 2013/93274

(86) Internationale Anmeldenummer:
**PCT/EP2017/080819**

(87) Internationale Veröffentlichungsnummer:
**WO 2018/108532 (21.06.2018 Gazette 2018/25)**

(54) **VERFAHREN ZUM ÜBERWACHEN EINER FAHRZEUGUMGEBUNG EINES FAHRZEUG-GESPANNS, SOWIE ÜBERWACHUNGSSYSTEM**

METHOD FOR MONITORING THE VEHICLE SURROUNDINGS OF A VEHICLE COMBINATION AND MONITORING SYSTEM

PROCÉDÉ DE SURVEILLANCE D'UN ENVIRONNEMENT DE VÉHICULE D'UN ATTELAGE DE VÉHICULE, ET SYSTÈME DE SURVEILLANCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.12.2016   DE 102016015363**

(43) Veröffentlichungstag der Anmeldung:
**23.10.2019   Patentblatt 2019/43**

(73) Patentinhaber: **ZF CV Systems Europe BV**
**1170 Brussels (BE)**

(72) Erfinder:
• **BROLL, Niklas**
  **30952 Ronnenberg (DE)**

• **HÜBNER, Sören**
  **26316 Varel (DE)**
• **WOLF, Thomas**
  **30890 Barsinghausen (DE)**

(74) Vertreter: **Rabe, Dirk-Heinrich**
**ZF CV Systems Hannover GmbH**
**Am Lindener Hafen 21**
**30453 Hannover (DE)**

(56) Entgegenhaltungen:
EP-A1- 2 786 347        EP-A2- 1 114 750
DE-A1- 102010 032 411    JP-A- 2002 181 518

**Beschreibung**

Die Erfindung betrifft ein Verfahren zum Überwachen einer Fahrzeugumgebung eines Fahrzeug-Gespanns, insbesondere eines Nutzfahrzeug-Gespanns, sowie ein Überwachungssystem zur Durchführung des Verfahrens.

Es ist bekannt, in Fahrzeugen, insbesondere Nutzfahrzeugen, Überwachungssysteme mit einem Sensorsystem einzusetzen, um eine Fahrzeugumgebung auf Objekte überwachen zu können. Als Sensorsysteme kommen beispielsweise Radarsensoren, Ultraschallsensoren, Kameras oder dergleichen in Betracht. Die Signale der Sensorsysteme werden verarbeitet und beispielsweise dazu verwendet, ein sich näherndes Objekt neben oder vor dem Fahrzeug zu erkennen und bei Erkennen eines solchen Objektes ein Warnsignal an den Fahrer auszugeben, insbesondere wenn von diesem eine Gefahr ausgeht. Mit einem solchen Überwachungssystem kann der Fahrer beispielsweise vor Objekten in einem sogenannten "toten Winkel" der Fahrzeugumgebung gewarnt werden, da dieser "tote Winkel" normalerweise nicht durch den Seitenspiegel erfasst werden kann und der Fahrer diesen während der Fahrt auch nicht direkt einsehen kann. Weiterhin kann dadurch ein Warnhinweis gegeben werden, wenn sich der Fahrer beispielsweise bei einer Kurvenfahrt oder beim Abbiegen auf andere Teile der Fahrzeugumgebung konzentriert.

Der Bereich, in dem eine solche Überwachung durch das Überwachungssystem stattfindet, ist insbesondere bei Verwendung einer Kamera durch einen Überwachungsraum festgelegt. Der Überwachungsraum ist ein Teilbereich eines möglichen Erfassungsbereiches der Kamera bzw. des Sensorsystems; der Überwachungsraum wird auch als "room of interest" (ROI) bezeichnet. Soll eine Überwachung der Fahrzeugumgebung seitlich des Fahrzeuges stattfinden, ist dieser Überwachungsraum demnach auf diesen Bereich seitlich des Fahrzeuges ausgerichtet, so dass potentiell kritische Objekte, von denen eine Gefahr bzw. eine Kollisionswahrscheinlichkeit ausgehen kann, detektiert werden können.

Ein derartiges Überwachungssystem mit einer Kamera an einem Nutzfahrzeug-Gespann zeigt DE 298 18 214 U1, bei dem der Erfassungsbereich und somit auch der Überwachungsraum der Kamera in Abhängigkeit eines Lenkeinschlages bzw. Lenkwinkels verändert wird. Dazu wird die Kamera durch eine Nachführautomatik in Abhängigkeit des Lenkwinkels bewegt bzw. verdreht. Dadurch soll erreicht werden, dass mit dem Überwachungssystem auch bei einem Abbiege-Vorgang der Anhänger des Nutzfahrzeug-Gespanns in seiner gesamten Länge sowie auch der parallel zum Anhänger verlaufende Verkehr in der seitlichen Fahrzeugumgebung erfasst und überwacht werden kann.

Auch in DE 10 2006 026 898 A1 bzw. EP 1 245 445 B1 ist ein Überwachungssystem beschrieben, bei dem mindestens eine Kamera des Überwachungssystems in Abhängigkeit einer Schwenkstellung bzw. eines Knickwinkels des Zugfahrzeuges zum Anhänger verstellbar ist, so dass durch eine entsprechende Ausrichtung der Kamera ein möglichst großer Bereich der seitlichen Fahrzeugumgebung insbesondere im Bereich des Anhängers dargestellt werden kann. In US 3 689 695 ist ein weiteres derartig verstellbares Kamerasystem für ein Nutzfahrzeug-Gespann beschrieben.

DE 103 51 655 A1 beschreibt ein Verfahren, bei dem eine Position und/oder die Schleppkurve einer nachgeschleppten Achse eines Anhängers während einer Kurvenfahrt insbesondere in Abhängigkeit eines erfassten Lenkwinkels rechnerisch ermittelt werden. In Abhängigkeit davon wird ein Blickwinkel bzw. Erfassungsbereich einer Kamera des Überwachungssystems derartig verändert, dass die nachgeschleppte Achse oder der Fahrweg der nachgeschleppten Achse vom Überwachungssystem erfasst und für den Fahrer dargestellt werden können und der Fahrer dadurch ihnen im Weg stehende Hindernisse sicher erkennen kann. Die Veränderung des Erfassungsbereiches erfolgt hierbei durch ein Verfahren oder ein Verschwenken der Kamera.

Nachteilig hierbei ist, dass eine Veränderung der Ausrichtung des Erfassungsbereiches bzw. des Überwachungsraumes der Kamera lediglich durch eine mechanische Verstellung der Kamera bzw. des Sensorsystems gegeben ist. Dadurch ist ein hoher baulicher Aufwand erforderlich und auch eine Nachrüstbarkeit nur sehr aufwändig möglich.

DE 10 2011 116 822 A1 beschreibt dazu ein Überwachungssystem mit Ultraschallsensoren bei dem innerhalb eines Erfassungsbereiches der Ultraschallsensoren ein anpassbarer Warnbereich bzw. Überwachungsraum festgelegt wird, der insbesondere im seitlichen Bereich der Fahrzeugumgebung liegt. Lediglich in den Überwachungsraum eindringende Objekte lösen dabei ein Warnsignal aus. Die Anpassung des Überwachungsraums erfolgt in Abhängigkeit der Verkehrssituation. So wird die Breite des Überwachungsraums innerhalb des Erfassungsbereiches bei Erkennen eines Abbiege-Vorganges maximal vergrößert, so dass Personen, Radfahrer oder dergleichen sicher erfasst werden können. Die Anpassung kann beispielsweise auch in Abhängigkeit des Lenkwinkels erfolgen. Bei hohen Geschwindigkeiten hingegen wird der seitliche Überwachungsraum auf einen minimalen seitlichen Überwachungsraum eingeschränkt, so dass keine unnötigen Warnsignale durch z.B. Markierungspfosten, Leitplanken oder dergleichen im seitlichen Fahrzeugbereich verursacht werden.

bzw. Erfassungsbereich einer Kamera des Überwachungssystems derartig verändert, dass die nachgeschleppte Achse oder der Fahrweg der nachgeschleppten Achse vom Überwachungssystem erfasst und für den Fahrer dargestellt werden können und der Fahrer dadurch ihnen im Weg stehende Hindernisse sicher erkennen kann. Die Veränderung des Erfassungsbereiches erfolgt hierbei durch ein Verfahren oder ein Verschwenken der Kamera.

Nachteilig hierbei ist, dass eine Veränderung der Ausrichtung des Erfassungsbereiches bzw. des Überwachungsraumes der Kamera lediglich durch eine mechanische Verstellung der Kamera bzw. des Sensorsystems gegeben ist. Dadurch ist ein hoher baulicher Aufwand erforderlich und auch eine Nachrüstbarkeit nur sehr aufwändig möglich.

DE102011116822A1 beschreibt dazu ein Überwachungssystem mit Ultraschallsensoren bei dem innerhalb eines Erfassungsbereiches der Ultraschallsensoren ein anpassbarer Warnbereich bzw. Überwachungsraum festgelegt wird, der insbesondere im seitlichen Bereich der Fahrzeugumgebung liegt. Lediglich in den Überwachungsraum eindringende Objekte lösen dabei ein Warnsignal aus. Die Anpassung des Überwachungsraums erfolgt in Abhängigkeit der Verkehrssituation. So wird die Breite des Überwachungsraums innerhalb des Erfassungsbereiches bei Erkennen eines Abbiege-Vorganges maximal vergrößert, so dass Personen, Radfahrer oder dergleichen sicher erfasst werden können. Die Anpassung kann beispielsweise auch in Abhängigkeit des Lenkwinkels erfolgen. Bei hohen Geschwindigkeiten hingegen wird der seitliche Überwachungsraum auf einen minimalen seitlichen Überwachungsraum eingeschränkt, so dass keine unnötigen Warnsignale durch z.B. Markierungspfosten, Leitplanken oder dergleichen im seitlichen Fahrzeugbereich verursacht werden.

Das Dokument EP2786347A1 betrifft ein System zum Steuern der Einstellung eines Seitenrückspiegels, der an einem Fahrzeug montiert ist, wobei das System mindestens einen Seitenrückspiegel umfasst, der von einem Motor betrieben wird, der von einer Steuereinheit gesteuert wird. Dazu umfasst das System zwei Gyro-Sensoren, die die Drehbewegung des Fahrzeuges erfassen. Der Seitenrückspiegel wird dann entsprechend der erfassten Drehbewegung eingestellt, um den toten Winkel zu verringern.

Die Druckschrift DE102010032411A1 offenbart ein System zur Überwachung zumindest eines Bereichs eines Fahrzeugs umfassend ein Zugfahrzeug und mindestens einen Anhänger mit einer Anzeigeeinrichtung und mindestens einer am Zugfahrzeug befestigten Kamera zur Aufnahme zumindest eines zu überwachenden seitlichen Umgebungsbereichs des Anhängers. Mittels Kamera ist ein Erfassungsbereich aufnehmbar, welcher größer ist als der zu überwachende Umgebungsbereich. Es sind Bildverarbeitungsmittel zur Verarbeitung der Aufnahme der zumindest einen Kamera für eine Anzeige auf der Anzeigeeinrichtung vorgesehen, welche Ausschnitts-Auswahlmittel zur automatischen Auswahl zumindest eines den zu überwachenden Umgebungsbereich zeigenden Ausschnitts der Aufnahme der Kamera anhand zumindest eines Parameters, welcher mit der Relativstellung des Zugfahrzeugs und des Anhängers in Beziehung steht, aufweist. Die Ausrichtung erfolgt so, dass der seitliche Nahbereich des Anhängers für den Fahrer auf einer Anzeigeeinheit dargestellt wird.

Das Dokument EP1114750A2 zeigt eine Vorrichtung zum Verstellen eines Rückspiegels oder alternativ einer Kamera an einem Kraftfahrzeug, bei dem insbesondere für eine Zugmaschine mit einem Anhänger der Knickwinkel des Fahrzeuggespanns für die Verstellung des Rückspiegels bzw. der Kamera berücksichtigt wird. Mit Hilfe eines Sensors für den Lenkwinkel, einem Geschwindigkeitssignal und/oder einem Signal für die Vorwärts- oder Rückwärtsfahrt lässt sich eine optimale Anpassung des Überwachungsraumes seitlich und hinter dem Fahrzeug erreichen.

Nachteilig bei allen genannten Überwachungssystemen ist, dass sobald bei einem Abbiege-Vorgang oder bei einer Kurvenfahrt das eigene Fahrzeug, insbesondere der eigene Anhänger des Fahrzeug-Gespanns, in den Überwachungsraum der Kamera gelangt, die Möglichkeit besteht, dass der Anhänger eine Warnung auslöst, da der eigene Anhänger durch das Eintreten in den Überwachungsraum vom Überwachungssystem als mögliches Kollisionsobjekt erkannt werden kann, wenn für den Anhänger vom Überwachungssystem ein bestimmtes dynamisches Verhalten festgestellt wird. Eine Unterscheidung, ob es sich um den eigenen Anhänger oder um einen Radfahrer oder ein weiteres Fahrzeug handelt, kann lediglich durch eine zusätzliche Filterung von Daten der Kamera erfolgen, die aber sehr aufwändig und auch fehleranfällig ist. Erfolgt keine derartige Filterung, kann in bestimmten Fahrsituationen aufgrund des Anhängers fälschlicherweise eine Warnung an den Fahrer erfolgen. Nach einer Vielzahl solcher Fehlwarnungen sinkt die Akzeptanz des Fahrers für das Überwachungssystem und weitere - auch wichtige - Warnungen vom Überwachungssystem werden ignoriert.

Aufgabe der Erfindung ist daher, ein Verfahren zum Überwachen einer Fahrzeugumgebung eines Fahrzeug-Gespanns, insbesondere Nutzfahrzeug-Gespanns, anzugeben, mit dem mit wenig Aufwand unnötige Warnsignale vermieden werden können. Weiterhin ist Aufgabe der Erfindung, ein Überwachungssystem zur Durchführung des Verfahrens anzugeben. Diese Aufgabe wird durch ein Verfahren nach Anspruch 1 sowie ein Überwachungssystem nach Anspruch 7 gelöst. Die Unteransprüche geben bevorzugte Weiterbildungen an.

Erfindungsgemäß ist demnach vorgesehen, in einem Überwachungssystem einen Überwachungsraum einer Kamera als Teilbereich eines Erfassungsbereiches der Kamera derart festzulegen, dass eine Fahrzeugumgebung zumindest bereichsweise im Überwachungsraum liegt und gleichzeitig das eigene Fahrzeug-Gespann, insbesondere Nutzfahrzeug-Gespann, nicht im Überwachungsraum liegt. Dazu wird erfindungsgemäß eine die Ausrichtung zwischen einem Zugfahrzeug und einem Anhänger des Fahrzeug-Gespanns charakterisierende Größe ermittelt und in Abhängigkeit dieser ermittelten Größe eine Stellgröße, vorzugsweise ein Drehwinkel, bestimmt, um den der Überwachungsraum innerhalb des Erfassungsbereiches verdreht wird.

Im Rahmen der Erfindung wird als Erfassungsbereich der Kamera der Bereich verstanden, in dem die Kamera theoretisch Objekte in der Fahrzeugumgebung erfassen kann. Die Abmessungen dieses Erfassungsbereich werden insbesondere durch die verwendete Optik der Kamera festgelegt. Die Ausrichtung des Erfassungsbereiches relativ zum Fahrzeug-Gespann erfolgt durch eine entsprechende Befestigung der Kamera an einem Befestigungspunkt am Zugfahrzeug, z.B. am Seitenspielgel, oder einem Befestigungspunkt am Anhänger, wobei die Kamera vorzugsweise verdrehfest an diesem Befestigungspunkt installiert ist.

Der Überwachungsraum hingegen ist ein Teilbereich dieses Erfassungsbereiches und gibt an, für welchen Bereich die Kamera tatsächlich Daten zur weiteren Verarbeitung beispielsweise an eine Steuereinrichtung des Überwachungssystems ausgibt. So können bei Kameras gewisse Randbereiche für die Weiterverarbeitung ausgeschlossen werden, d.h. der Erfassungsbereich wird zur Überwachung unter Umständen nicht vollständig ausgenutzt, um z.B. nicht benötigte Bereiche auszublenden.

Durch das erfindungsgemäße Vorgehen kann also die relative Lage des Überwachungsraumes innerhalb des Erfassungsbereiches dynamisch an die aktuell durchgeführte Lenksituation des Fahrzeug-Gespanns angepasst werden. Ändert sich demnach durch eine aktuell umgesetzte Lenkbewegung z.B. während einer Kurvenfahrt oder bei einem Abbiege-Vorgang die Ausrichtung zwischen dem Zugfahrzeug und dem Anhänger, wird dies erfasst und der Überwachungsraum daraufhin dynamisch verstellt. Die dynamische Verstellung erfolgt dabei entgegengesetzt proportional zu der angeforderten Lenkbewegung bzw. dem Lenkeinschlag, um die Drehung der fest installierten Kamera aufgrund der Lenkbewegung zu kompensieren. Vorteilhafterweise wird dadurch erreicht, dass das eigene Fahrzeug-Gespann in der jeweiligen Verkehrssituation in einfacher Weise aus dem Überwachungsbereich ausgeblendet werden kann, d.h. das eigene Fahrzeug-Gespann wird von der Bildverarbeitung im Überwachungssystem nicht mehr berücksichtigt. Demnach kann vermieden werden, dass das eigene Fahrzeug-Gespann von dem Überwachungssystem, das den Überwachungsraum auf potentiell kritische Objekte, von denen einen Gefahr bzw. eine Kollisionswahrscheinlichkeit ausgehen kann, überwacht, selbst als kritisches Objekt eingestuft wird. Eine aufwändige Filterung kann demnach entfallen, indem dieser Bereich nicht berücksichtigt wird und demnach nicht zu verarbeiten ist. Vorzugsweise ist der Überwachungsraum dabei auf die Fahrzeugumgebung seitlich des eigenen Fahrzeug-Gespanns ausgerichtet, um insbesondere diesen Bereich der Fahrzeugumgebung zu überwachen.

Erfindungsgemäß wird somit erkannt, dass durch diese dynamische Drehung des Uberwachungsraumes eine infolge der Erkennung beispielsweise des eigenen Anhängers während einer Kurvenfahrt fälschlicherweise ausgegebene Warnmeldung vermieden werden kann; die Akzeptanz für das Überwachungssystem steigt. Zudem wird der Überwachungsraum durch die dynamische Drehung in Abhängigkeit der Ausrichtung auf den tatsächlich interessanten Bereich der Fahrzeugumgebung in Richtung parallel der Ausgangsfahrbahn bzw. den während einer Geradeausfahrt überwachten Bereich zurückgestellt.

Die dynamische Verstellung des Überwachungsraumes erfolgt vorteilhafterweise per Software auf der Steuereinrichtung des Überwachungssystems. D.h. es ist keine Verstellung der Kamera selbst gegenüber dem Befestigungspunkt nötig, um auf die Veränderung der Ausrichtung zwischen dem Zugfahrzeug und dem Anhänger zu reagieren und diese Veränderung zu kompensieren. Dadurch sind eine einfache Nachrüstbarkeit sowie ein geringer Montage- und Kostenaufwand gegeben.

Als kritische Objekte, auf die das Überwachungssystem die Fahrzeugumgebung im Überwachungsraum überwacht, werden im Rahmen der Erfindung Objekte verstanden, von denen eine Kollisionswahrscheinlichkeit mit dem eigenen Fahrzeug-Gespann ausgehen kann. Dies kann beispielsweise festgestellt werden, indem die Bewegung eines Objektes im Überwachungsraum mit der Bewegung des eigenen Fahrzeug-Gespanns verglichen wird, wobei dazu beispielsweise prädizierte Trajektorien für das erkannte Objekt und das Fahrzeug-Gespann erstellt und verglichen werden. Ergeben sich Überschneidungen kann eine Kollisionswahrscheinlichkeit ermittelt werden und der Fahrer entsprechend über einen Warnhinweis gewarnt werden, so dass dieser reagieren kann, um eine Kollision noch zu vermeiden. Ggf. können auch eine automatisierte Bremsung oder weitere automatisierte Maßnahmen eingeleitet werden.

Das Überwachungssystem dient somit dazu, das Fahrgeschehen in der aktuellen Verkehrssituation, insbesondere während einer Kurvenfahrt oder einem Abbiege-Vorgang oder einem Überhol-Vorgang, zu überwachen und dem Fahrer zu assistieren, da von dem Überwachungssystem auch Bereiche der Fahrzeugumgebung abgedeckt werden können, die vom Fahrer nicht überblickt werden können bzw. auf die der Fahrer seine Aufmerksamkeit unter Umständen nicht richtet. Durch die Drehung des Überwachungsraumes kann diese Assistenz zuverlässiger und mit höherer Akzeptanz durch den Fahrer erfolgen.

Vorzugsweise wird die die Ausrichtung zwischen dem Zugfahrzeug und dem Anhänger charakterisierende Größe als ein Lenkwinkel gemessen, wobei der Lenkwinkel angibt, wie stark das Zugfahrzeug aktuell eingelenkt wird. Ergänzend kann auch eine möglicherweise vorhandene Anhängerlenkung berücksichtigt werden. Vorteilhafterweise kann dadurch eine einfache die Ausrichtung charakterisierende Größe zur Bewertung der aktuellen Lenksituation und zur Drehung des Überwachungsraumes verwendet werden, wobei der Überwachungsraum dann entgegengesetzt proportional zu diesem Lenkwinkel dynamisch verdreht wird.

Alternativ kann die die Ausrichtung zwischen dem Zugfahrzeug und dem Anhänger charakterisierende Größe ein Lenkradwinkel sein, für den zusätzlich ein Übersetzungsfaktor berücksichtigt wird, um die tatsächlich umgesetzte Lenkwirkung zu erhalten. Auch dadurch kann eine einfache die Ausrichtung charakterisierende Größe zur Bewertung der aktuellen Lenksituation und zur Drehung des Überwachungsraumes herangezogen werden.

Gemäß einer weiteren Alternative kann als die Ausrichtung zwischen dem Zugfahrzeug und dem Anhänger charakterisierende Größe ein Knickwinkel zwischen dem Zugfahrzeug und dem Anhänger verwendet werden. Vorteilhafterweise wird dadurch eine tatsächliche Ausrichtung zwischen dem Anhänger und dem Zugfahrzeug bereitgestellt, in Abhängigkeit derer die Stellgröße, z.B. der Drehwinkel, ermittelt werden kann.

Vorzugsweise findet bei der Verdrehung des Überwachungsraumes keine zusätzliche Veränderung der Größe des Überwachungsraumes statt, da bei einer Kurvenfahrt oder einem Abbiege-Vorgang derselbe Bereich wie bei der Geradeausfahrt zu erfassen und auf Gefahren zu bewerten ist. Um dies zu erreichen, wird der Überwachungsraum derartig festgelegt, dass der Überwachungsraum sowohl bei einer Geradeausfahrt als auch bei einer beliebigen Kurvenfahrt oder bei einem beliebigen Abbiege-Vorgang größenunverändert in den Erfassungsbereich passt. Dadurch kann der Aufwand der Anpassung verringert werden, da keine zusätzlichen Anpassungen und Berechnungen durchzuführen sind. Gleichzeitig kann ein größtmöglicher Bereich der Fahrzeugumgebung erfasst werden.

Alternativ kann der Überwachungsraum auch für eine Geradeausfahrt optimiert werden, d.h. für eine Geradeausfahrt wird der tatsächlich relevante Bereich vollständig abgedeckt. Tritt dann eine Situation ein, in der aufgrund der Drehung des Überwachungsraumes infolge einer Lenkbewegung Bereiche des Überwachungsraumes aus dem Erfassungsbereich herausfallen, d.h. der Überwachungsraum den Erfassungsbereich bereichsweise überschreitet, wird der Überwachungsraum (zwangsläufig) um diese Bereiche verkleinert. Somit findet keine aktive Veränderung der Größe des Überwachungsraumes statt, sondern wenn überhaupt lediglich eine zwangsläufige Anpassung des Überwachungsraumes infolge einer Überschreitung des Erfassungsbereiches.

Die Erfindung wird im Folgenden anhand der beiliegenden Zeichnungen an einigen Ausführungsformen näher erläutert. Es zeigen:

Fig. 1    ein Nutzfahrzeug-Gespann mit einem Überwachungssystem während einer Geradeausfahrt;

Fig. 2    das Nutzfahrzeug-Gespann gemäß Fig. 1 während einer Kurvenfahrt;

Fig. 3    das Nutzfahrzeug-Gespann gemäß Fig. 1 während eines Abbiege-Vorgangs;

Fig. 4    das Nutzfahrzeug-Gespann gemäß Fig. 1 mit einer alternativen Anordnung des Überwachungssystems; und

Fig. 5    ein Flussdiagramm zur Durchführung des erfindungsgemäßen Verfahrens.

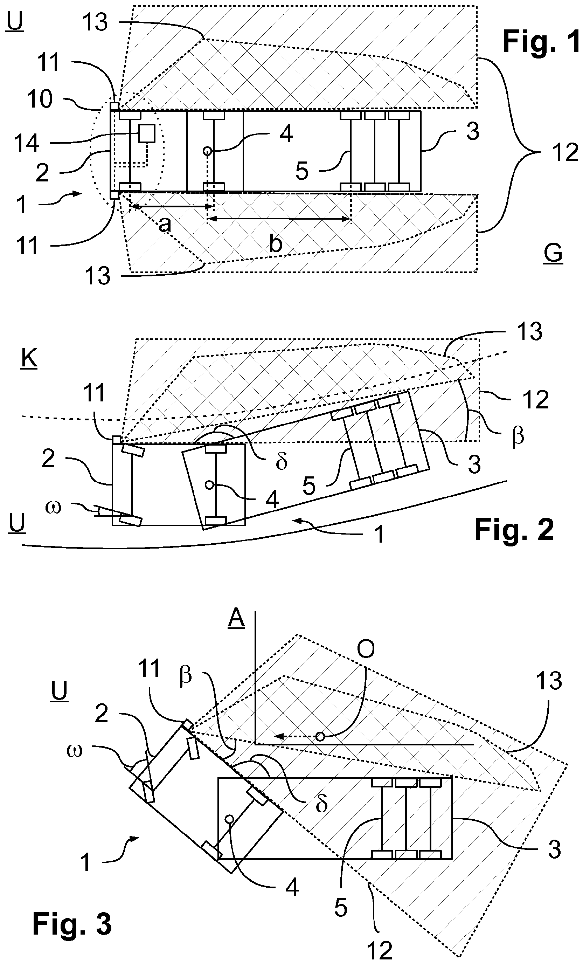

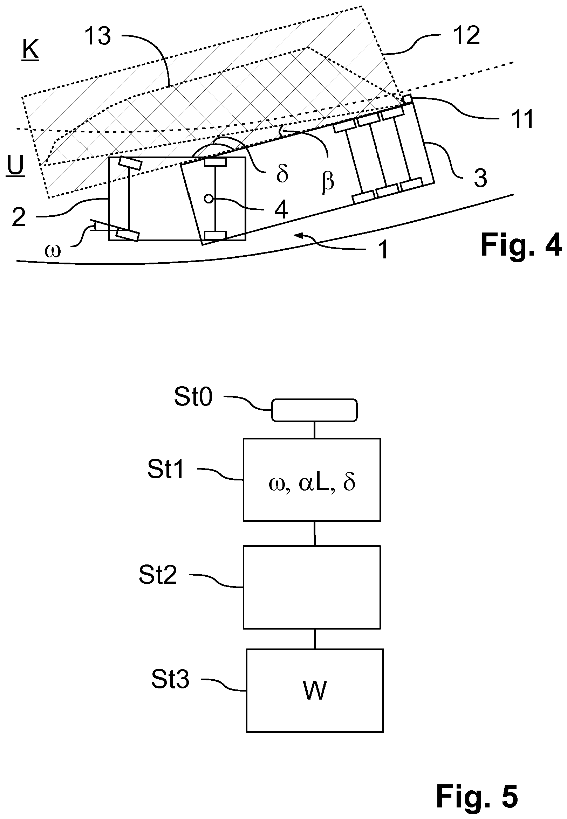

Gemäß Fig. 1 ist schematisch ein Nutzfahrzeug-Gespann 1 aus einem Zugfahrzeug 2 und einem Anhänger 3 dargestellt. Lediglich beispielhaft ist das Nutzfahrzeug-Gespann 1 als ein Sattelzug mit einem Sattelauflieger als Anhänger 3 gezeichnet, der über einen Königszapfen 4 schwenkbar mit dem Sattelschlepper verbunden ist. Es kommen aber z.B. auch Deichselanhänger in Frage. Allgemein ist das erfindungsgemäße Verfahren bei Nutzfahrzeug-Gespannen 1 anwendbar, bei denen der eigene Anhänger 3 während einer bestimmten Verkehrssituation, beispielsweise in einer Kurvenfahrt K (s. Fig. 2 und Fig. 4) oder während eines Abbiege-Vorganges A (s. Fig. 3), seine Ausrichtung gegenüber dem Zugfahrzeug 2 verändert.

Die Ausrichtung zwischen dem Zugfahrzeug 2 und dem Anhänger 3 wird durch einen Lenkeinschlag am Zugfahrzeug 2 und/oder infolge einer Anhängerlenkung bewirkt. D.h. die Ausrichtung kann - wie in den Figuren 2 bis 4 dargestellt - durch einen aktuell vorliegenden Lenkwinkel $\omega$ charakterisiert werden oder aber durch einen aktuell vorliegenden Knickwinkel $\delta$ zwischen dem Zugfahrzeug 2 und dem Anhänger 3. Hierbei wird angenommen, dass sich bei einer Kurvenfahrt K oder bei einem Abbiege-Vorgang A mit einem bestimmten Lenkwinkel $\omega$ nach einiger Zeit auch eine bestimmte maximale Ausrichtung zwischen dem Zugfahrzeug 2 und dem Anhänger 3 einstellt, d.h. ein Knickwinkel $\delta$, der sich bei fortlaufender Bewegung des Nutzfahrzeug-Gespanns 1 mit dem konstanten Lenkwinkel $\omega$ maximal einstellen kann.

Das Nutzfahrzeug-Gespann 1 weist gemäß Fig. 1 ein Überwachungssystem 10 auf, das die Fahrzeugumgebung U zumindest bereichsweise auf eindringende bzw. sich darin bereits befindende Objekte überwacht. Insbesondere wird hierbei der Bereich der Fahrzeugumgebung U seitlich des Nutzfahrzeug-Gespanns 1 überwacht. Das Überwachungssystem 10 ist ausgebildet, Objekte, die sich im überwachten Bereich befinden, als kritische Objekte O im Hinblick auf eine potentielle Kollision mit dem eigenen Nutzfahrzeug-Gespann 1 einzustufen, wobei dies beispielsweise durch einen Vergleich einer voraussichtlichen Trajektorie eines erfassten Objektes mit der voraussichtlichen Trajektorie des eigenen Nutzfahrzeug-Gespanns 1 stattfindet und daraus eine Kollisionswahrscheinlichkeit W ermittelt wird. Ergeben sich Überschneidungen, so wie beispielsweise in Fig. 3 für das kritische Objekt O angedeutet, das sich beim Abbiege-Vorgang A auf das Nutzfahrzeug-Gespann 1 zubewegt, kann eine Kollision nicht ausgeschlossen und der Fahrer entsprechend gewarnt werden und/oder für das Nutzfahrzeug-Gespann 1 eine automatisierte Bremsung eingeleitet werden, da die Kollisionswahrscheinlichkeit K hoch ist.

Dadurch kann dem Fahrer in gewissen Verkehrssituationen ein Warnhinweis gegeben werden, ob im überwachten Bereich der Fahrzeugumgebung U, insbesondere bei einer Kurvenfahrt K oder bei einem Abbiege-Vorgang A, sich dem eigenen Nutzfahrzeug-Gespann 1 nähernde kritische Objekte O, z.B. andere Fahrzeuge, Radfahrer oder Fußgänger, vorhanden sind, mit denen eine Kollision zumindest nicht ausgeschlossen werden kann.

Durch das Überwachungssystem 10 kann je nach überwachtem Bereich der Fahrzeugumgebung U der seitliche Sichtbereich des Fahrers zusätzlich zu einem ggf. vorhandenen Seitenspiegel erweitert werden, da beispielsweise auch kritische Objekte O in einem sogenannten "toten Winkel" erfasst werden können, die der Fahrer im Seitenspiegel nicht sehen kann. Auch in Situationen, in denen sich der Fahrer auf etwas anderes konzentrieren muss und daher beispielsweise nicht aus dem in Richtung der Kurvenfahrt ausgerichteten Seitenspiegel schauen kann, kann das Überwachungssystem 10 als Unterstützung während dieser Verkehrssituation dienen.

Das Überwachungssystem 10 weist dazu - vorzugsweise beidseitig - eine Kamera 11 auf, die jeweils auf die Fahrzeugumgebung U seitlich des Nutzfahrzeug-Gespanns 1 gerichtet ist, um dieses auf kritische Objekte O zu überwachen. Die Kamera 11 kann dazu am Zugfahrzeug 2 beispielsweise im Bereich des in den Figuren nicht dargestellten Seitenspiegels installiert sein, um einen möglichst großen Bereich neben dem Nutzfahrzeug-Gespann 1 erfassen zu können. Es sind aber auch andere Positionen am Zugfahrzeug 2 möglich. Gemäß Fig. 4 ist aber beispielsweise auch eine Befestigung am Anhänger 3 möglich, um die Fahrzeugumgebung U seitlich des Nutzfahrzeug-Gespanns 1 in Richtung des Zugfahrzeuges 2 überwachen zu können. Somit kann am Zugfahrzeug 2 oder am Anhänger 3 ein Befestigungspunkt der Kamera 11 definiert werden, wobei die Kamera 11 im Betrieb bezüglich dieses Befestigungspunktes vorzugsweise verdrehfest ist.

Die jeweilige Kamera 11 des Überwachungssystems 10 ist dazu in allen Varianten derartig ausgerichtet, dass ein Erfassungsbereich 12 der Kamera 11 zumindest auf den Bereich der Fahrzeugumgebung U zeigt, der seitlich neben dem Nutzfahrzeug-Gespann 1 liegt. Lediglich beispielhaft ist der Erfassungsbereich 12 in den Figuren als schraffierte Fläche angedeutet. Diese Fläche kann je nach Anwendungsbereich und Art bzw. Auslegung der Kamera 11 auch variieren, um einen weiteren oder weiter geöffneten Bereich für die Überwachung abdecken zu können.

Der Erfassungsbereich 12 ist derartig definiert, dass durch die jeweils gewählte Art und Optik der Kamera 11 in diesem Erfassungsbereich 12 Objekte theoretisch erkannt werden können. D.h. dieser Erfassungsbereich 12 ist durch die gewählten Komponenten der Kamera 11 sowie der relativen Lage der Kamera 11 zu dem Befestigungspunkt festgelegt. Der Erfassungsbereich 12 bleibt bei einer Befestigung der Kamera 11 am Zugfahrzeug 2 relativ zum Zugfahrzeug 2 gleich. Wie in den Fig. 2 bis 4 gezeigt, ändert sich allerdings bei einer Variation der Ausrichtung des Zugfahrzeuges 2 gegenüber dem Anhänger 3 während einer Kurvenfahrt K oder eines Abbiege-Vorganges A die Lage des Erfassungsbereiches 12 relativ zum Anhänger 3 sowie auch zur Fahrzeugumgebung U. Entsprechendes gilt gemäß Fig. 4 bei einer Befestigung der Kamera 11 am Anhänger 3 für die Ausrichtung relativ zum Zugfahrzeug 2.

Als Teilbereich des Erfassungsbereiches 12 ist ein Überwachungsraum 13 definiert, innerhalb dessen Objekte auch tatsächlich von der Kamera 11 erfasst und vom Überwachungssystem 10 verarbeitet werden. Befindet sich demnach im möglichen Erfassungsbereich 12 der Kamera 11 aber außerhalb des Überwachungsraumes 13 ein Objekt in der Fahrzeugumgebung U, wird dieses nicht von der Kamera 11 erfasst und dieses Objekt kann demnach an dieser Position auch keine Warnung auslösen. Es können also nicht relevante Bereiche des Erfassungsbereiches 12 für die jeweilige Anwendung ausgeschlossen werden, ohne dass dazu eine Anpassung der Komponenten der Kamera 11, d.h. insbesondere der Optik der Kamera 11, nötig ist. Dadurch kann vermieden werden, dass bei der Analyse der Daten im Überwachungssystem 10 unnötige Daten verarbeitet werden.

Dieser Überwachungsraum 13 wird auch als sogenannter "room of interest" (ROI) bezeichnet und ist den Figuren ebenfalls schraffiert dargestellt. Der Überwachungsraum 13 kann von einer Steuereinrichtung 14 des Überwachungssystems 10 festgelegt werden, beispielsweise von einer entsprechenden Software auf der Steuereinrichtung 14.

In den in den Figuren gezeigten Verkehrssituationen ist der Überwachungsraum 13 jeweils derartig festgelegt, dass dieser auf den Bereich der Fahrzeugumgebung U seitlich des Nutzfahrzeug-Gespanns 1 gerichtet ist, ohne dass dabei das eigene Zugfahrzeug 2 sowie der eigene Anhänger 3 im Überwachungsraum 13 liegen. Um bei einer Kurvenfahrt K oder bei einem Abbiege-Vorgang A zu vermeiden, dass der eigene Anhänger 3 bei den Ausführungen in Fig. 2 und Fig. 3 bzw. das eigene Zugfahrzeug 2 bei der Ausführung in Fig. 4 in den Überwachungsraum 13 eindringt und dadurch vom Überwachungssystem 10 möglicherweise als kritisches Objekt O in der überwachten Fahrzeugumgebung U eingestuft werden kann und eine entsprechende Warnmeldung an den Fahrer ausgegeben wird, ist vorgesehen den Überwachungsraum 13 durch eine Drehung innerhalb des Erfassungsbereiches 12 um einen Drehwinkel $\beta$ anzupassen. Als Stellgröße wird also in diesem Ausführungsbeispiel ein Drehwinkel $\beta$ angegeben, um den der Überwachungsraum 13 durch eine Drehung verdreht wird.

Durch diese Drehung wird hierbei erreicht, dass der eigene Anhänger 3 nicht mehr erfasst und auch der Überwachungsraum 13 wieder auf den Bereich der Fahrzeugumgebung U ausgerichtet wird, der zur Bewertung der Kollisionswahrscheinlichkeit W tatsächlich relevant ist und daher überwacht werden soll, d.h. den Bereich entlang der Ausgangsfahrbahn. Auch dieser ändert sich durch den Kurveneinschlag des Zugfahrzeuges 2.

Diese Anpassung bzw. Drehung des Überwachungsraumes 13 erfolgt erfindungsgemäß dadurch, dass der Überwachungsraum 13 in Abhängigkeit einer die Ausrichtung zwischen dem Anhänger 3 und dem Zugfahrzeug 2 beschreibenden Größe dynamisch gedreht wird. Die Drehung erfolgt hierbei entgegengesetzt proportional zur Veränderung der Ausrichtung, d.h. entgegengesetzt zur Lenkbewegung, so dass die durch die Lenkbewegung verursachte Veränderung der Lage der fest installierten Kamera 11 relativ zur Fahrzeugumgebung U nahezu kompensiert werden kann.

Die Ausrichtung des Anhängers 3 relativ zum Zugfahrzeug 2 kann beispielsweise durch den aktuell vorliegenden Lenkwinkel $\omega$ während der Kurvenfahrt K bzw. während des Abbiege-Vorgangs A charakterisiert werden. Ergänzend kann auch eine möglicherweise vorhandene Anhängerlenkung berücksichtigt werden, die die Ausrichtung des Anhängers 3 relativ zum Zugfahrzeug 2 zusätzlich beeinflussen kann. Alternativ kann auch der aktuelle Knickwinkel $\delta$ zwischen dem Zugfahrzeug 2 und dem Anhänger 3 direkt gemessen werden und die Drehung um den Drehwinkel $\beta$ in Abhängigkeit davon festgelegt werden.

Für den einfacheren Fall, dass bei einer angeforderten Lenkung lediglich das Zugfahrzeug 2 um einen bestimmten Lenkwinkel $\omega$ gelenkt wird und die Kamera 11 am Zugfahrzeug 2 befestigt ist, ergibt sich für die Drehung des Überwachungsraumes 13 ein Drehwinkel $\beta$ von beispielsweise

$$\beta = \arccos\left(\frac{2a^2 + 2ab\,sin\left(arccos\left(\frac{b}{a\cot(\omega)}\right)\right)}{2a\sqrt{a^2 + b^2 + 2ab\,sin\left(arccos\left(\frac{b}{a\cot(\omega)}\right)\right)}}\right)$$

wobei $\omega$ den Lenkwinkel, a einen Achsabstand am Zugfahrzeug 2 und b einen Abstand zwischen dem Königszapfen 4 und einer Anhänger-Achse 5 angibt. Alternativ kann auch direkt der durch das Lenkrad vorgegebene Lenkradwinkel $\alpha$ erfasst werden, wobei dazu in obiger Formel der Lenkwinkel $\omega$ durch den Term "$\alpha L$" zu ersetzen ist, wobei L einen Übersetzungsfaktor zwischen dem Lenkwinkel $\omega$ und dem Lenkradwinkel $\alpha$ angibt, der durch die Mechanik der Lenkübersetzung gegeben ist.

Für die Kamera 11, die in Fig. 1 auf der rechten Seite des Fahrzeuges 1 angeordnet ist, ist die oben genannte Formel für Lenkwinkel $\omega$ gültig, für die gilt:

$$0 < \omega \leq arctan\left(\frac{a}{b}\right)$$

Entsprechend gilt für die Kamera 11 auf der linken Seite des Fahrzeuges 1:

$$-arctan\left(\frac{a}{b}\right) \leq \omega < 0$$

Hierbei wird davon ausgegangen, dass bei einer Drehung des Lenkrades und somit auch der Räder im Uhrzeigersinn ein positiver Lenkwinkel $\omega$ eingestellt wird und bei einer Drehung gegen den Uhrzeigersinn ein negativer Lenkwinkel $\omega$. Bei den Grenzwerten von Null liegt in beiden Fällen eine Geradeausfahrt G vor und für Lenkwinkel $\omega$ kleiner als Null bei einer Kamera 11 auf der rechten Seite und größer als Null bei einer Kamera 11 auf der linken Seite ist keine Drehung nötig, da sich der Anhänger 3 nicht in den Überwachungsbereich 13 bewegen kann, da in die jeweilig andere Richtung gelenkt wird. Bei dem oberen Grenzwert (+/- arctan(a/b)) steht der Anhänger 3 senkrecht zum Zugfahrzeug 2 und für betragsmäßig größere Lenkwinkel $\omega$ stellt sich während einer Kurvenfahrt K oder einem Abbiege-Vorgang A kein konstanter Knickwinkel $\delta$ mehr ein, so dass mit dieser Formel keine zuverlässige Angabe der Stellgröße bzw. des Drehwinkels $\beta$ mehr möglich ist.

Der Drehwinkel $\beta$ des Überwachungsraumes 13 wird also in Abhängigkeit der aktuellen Lenkvorgabe sowie des Lenkverhaltens des Nutzfahrzeug-Gespanns 1 festgelegt. Dieser in der obigen Formel angegebene Zusammenhang ist insbesondere für Geschwindigkeiten des Fahrzeug-Gespanns 1 von weniger als 40 km/h gültig und ist in Abhängigkeit von der Fahrsituation ggf. anzupassen, da weitere Einflussgrößen das Lenkverhalten des Nutzfahrzeug-Gespanns 1 beeinflussen können, die dann auch Auswirkungen auf den Drehwinkel $\beta$ haben.

Die Anpassung des Überwachungsraumes 13 über den Drehwinkels $\beta$ findet - wie in den Figuren dargestellt - vorzugsweise ohne eine Anpassung der Größe des Überwachungsraumes 13 statt. D.h. der Überwachungsraum 13 wird innerhalb des Erfassungsbereiches 12 der Kamera 11 lediglich verdreht. Dazu ist der Überwachungsraum 13 gegenüber dem Erfassungsbereich 12 der Kamera 11 vorzugsweise derartig festgelegt, dass ein größenunabhängiges Verdrehen bis zu einem maximalen Lenkwinkel ω bzw. bis zu einem Knickwinkel δ von 90° für beispielsweise einen Abbiege-Vorgang A möglich ist.

Um dadurch aber keine relevanten Bereiche auszuschließen, z.B. bei der Geradeausfahrt G, können alternativ bei kleiner werdenden Knickwinkeln δ insbesondere im Bereich von 90° aus dem Erfassungsbereich 12 herausfallende Bereiche des in der Größe festbleibenden Überwachungsraumes 13 in der Kurvenfahrt bzw. während des Abbiegens auch abgeschnitten werden, da diese zur Bewertung der Kollisionswahrscheinlichkeit W in diesen Verkehrssituationen weniger relevant sind. Dadurch kann der Überwachungsraum 13 von vornherein, d.h. bei einer Geradeausfahrt G, größer gewählt werden. Eine aktive Anpassung der Größe des Überwachungsraumes 13 innerhalb des Erfassungsbereiches 12 findet allerdings nicht statt.

Bei einer Geradeausfahrt G gemäß Fig. 1, d.h. bei einem Lenkwinkel ω = 0° und einem Knickwinkel δ = 180°, wird demnach der Überwachungsraum 13 derartig festgelegt, dass der eigene Anhänger 3 und das Zugfahrzeug 2 nicht erfasst werden. Dies entspricht einem Drehwinkel β des Überwachungsraumes 13 von 0°. Ausgehend davon wird der Überwachungsraum 13 unter Beibehaltung der Position der Kamera 11 sowie deren Erfassungsbereich 12 bei steigendem Lenkwinkel ω und fallendem Knickwinkel 8 um den aus obiger Formel folgenden Drehwinkel β verdreht, so dass - wie in den Figuren 2 bis 4 gezeigt - der Anhänger 3 bzw. das Zugfahrzeug 2 zwar im Erfassungsbereich 12 liegen aber nicht mehr in den Überwachungsraum 13 fallen. Demnach kann auch keine Warnung aufgrund festgestellter Kollision von diesen ausgehen.

Die Anpassung des Drehwinkels β des Überwachungsraumes 13 erfolgt durch eine auf dem Überwachungssystem 10 insbesondere auf dessen Steuereinrichtung 14 installierten Software, der beispielsweise über einen CAN-Bus der Lenkwinkel ω bzw. der Lenkradwinkel α oder der Knickwinkel 8 sowie weitere relevante Größen zur Bestimmung des Drehwinkels β übermittelt wird. Es kann aber auch eine andere die Ausrichtung zwischen dem Zugfahrzeug 2 und dem Anhänger 3 beschreibende Größe übermittelt werden, auf deren Grundlage in der Steuereinrichtung 14 dann der Drehwinkel β für die Verstellung des Überwachungsraumes 13 ermittelt und eingestellt wird.

Das Überwachungssystem 10 kann analog zu den in den Figuren 2 bis 4 gezeigten Überwachungen auch den Bereich der Fahrzeugumgebung U links neben dem Nutzfahrzeug-Gespann 1 überwachen, um auch in einer Linkskurve oder bei einem Linksabbiegen keine unnötigen Warnungen vom Überwachungssystem 10 zu erhalten, wenn sich die Ausrichtung des Anhängers 3 gegenüber dem Zugfahrzeug 2 ändert.

Das erfindungsgemäße Verfahren kann wie in Fig. 5 dargestellt beispielsweise folgendermaßen ausgeführt werden:

In einem anfänglichen Schritt St0 wird das Überwachungssystem 10 initialisiert. Hierbei wird der Überwachungsraum 13 innerhalb des Erfassungsbereiches 12 der Kamera 11 des Überwachssystems 10 in Abhängigkeit von vorgegebenen Parametern festgelegt, um eine an die Anwendung angepasste Überwachung zu ermöglichen, beispielsweise wie in Fig. 1 gezeigt. Dieser festgelegte Überwachungsraum 13 wird wie oben beschrieben auf kritische Objekte O überwacht, von denen eine Kollisionswahrscheinlichkeit W mit dem eigenen Nutzfahrzeug-Gespann 1 ausgehen kann.

Nach dem Festlegen des Überwachungsraumes 13 wird in einem ersten Schritt St1 eine Ausrichtung des Zugfahrzeuges 2 zum Anhänger 3 ermittelt. Dies erfolgt beispielsweise über den Lenkwinkel ω, den Lenkradwinkel α unter Berücksichtigung des Übersetzungsfaktors L oder den Knickwinkel δ wie oben beschrieben. Diese Angaben können von der Steuereinrichtung 14 des Überwachungssystems 10 beispielsweise über den CAN-Bus oder dergleichen ausgelesen werden.

In einem zweiten Schritt St2 wird von der Steuereinrichtung 14 aus der Ausrichtung des Zugfahrzeuges 2 zum Anhänger 3, d.h. dem Lenkwinkel ω, dem Lenkradwinkel α unter Berücksichtigung des Übersetzungsfaktors L oder aus dem Knickwinkel δ, ein Drehwinkel β des Überwachungsraumes 13 berechnet und eingestellt. Der Drehwinkel β wird dabei wie beschrieben derartig berechnet und eingestellt, dass der Überwachungsraum 13 den eigenen Anhänger 3 bzw. das eigene Zugfahrzeug 2 nicht erfasst, selbst wenn sich diese im Erfassungsbereich 12 der Kamera 11 befinden, so dass diese vom Überwachungssystem nicht als kritische Objekte O eingestuft werden können. Beispielhaft erfolgt die Berechnung in Abhängigkeit des Lenkwinkels ω beispielsweise über die oben genannte Formel.

In einem dritten Schritt St3 wird ermittelt, ob sich innerhalb des Überwachungsraumes 13 kritische Objekte O befinden, d.h. in der aktuellen Verkehrssituation G, K, A eine Kollision mit einem der in dem überwachten Bereich der Fahrzeugumgebung U erfassten Objekte wahrscheinlich ist, d.h. eine hohe Kollisionswahrscheinlichkeit W ausgeht. Ist dies der Fall, wird eine Warnung an den Fahrer ausgegeben und/oder ggf. automatisiert in die Bremsung eingegriffen.

Als kritisch werden hierbei Objekte eingestuft, für die beispielsweise anhand ihrer aktuellen Bewegung relativ zur Bewegung des eigenen Nutzfahrzeug-Gespanns 1 eine Kollisionswahrscheinlichkeit W ausgeht. Da das eigene Nutzfahrzeug-Gespann 1 nach obiger Drehung um den Drehwinkel β nicht im Überwachungsraum 13 liegt, können sowohl das Zugfahrzeug 2 als auch der Anhänger 3 nicht als kritische Objekte O klassifiziert werden, auch wenn sich diese im Erfassungsbereich 12 der Kamera 11 befinden.

Bezugszeichenliste (Bestandteil der Beschreibung)

| 1 | Nutzfahrzeug-Gespann |
|---|---|
| 2 | Zugfahrzeug |
| 3 | Anhänger |
| 4 | Königszapfen |
| 5 | Anhänger-Achse |
| 10 | Überwachungssystem |
| 11 | Kamera |
| 12 | Erfassungsbereich |
| 13 | Überwachungsraum |
| 14 | Steuereinrichtung |

| A | Abbiege-Vorgang |
|---|---|
| a | Achsabstand Zugfahrzeug 2 |
| $\alpha$ | Lenkradwinkel |
| b | Abstand Königszapfen 4 Anhänger-Achse 5 |
| $\beta$ | Drehwinkel/Stellgröße |
| $\delta$ | Knickwinkel |
| G | Geradeausfahrt |
| L | Übersetzungsfaktor |
| K | Kurvenfahrt |
| O | kritische Objekte |
| U | Fahrzeugumgebung |
| W | Kollisionswahrscheinlichkeit |
| $\omega$ | Lenkwinkel |

St0, St1, St2, St3    Schritte des Verfahrens

**Patentansprüche**

1. Verfahren zum Überwachen einer Fahrzeugumgebung (U) eines Fahrzeug-Gespanns (1), insbesondere Nutzfahrzeug-Gespanns (1), bestehend aus einem Zugfahrzeug (2) und mindestens einem Anhänger (3) unter Verwendung eines Überwachungssystems (10) mit einer Kamera (11), mit mindestens den folgenden Schritten:

   - Festlegen eines Überwachungsraumes (13) als Teilbereich innerhalb eines Erfassungsbereiches (12) der Kamera (11), wobei das Überwachungssystem (10) lediglich den Überwachungsraum (13) auf kritische Objekte (O), von denen eine Kollisionswahrscheinlichkeit (W) ausgehen kann, überwacht, wobei der Überwachungsraum (13) derartig festgelegt und ausgerichtet wird, dass die Fahrzeugumgebung (U) zumindest bereichsweise im Überwachungsraum (13) liegt und gleichzeitig das Fahrzeug-Gespann (1) nicht im Überwachungsraum (13) liegt indem der Überwachungsraum (13) auf die Fahrzeugumgebung (U) seitlich des eigenen Fahrzeug-Gespanns (1) ausgerichtet wird, ohne dabei das eigene Fahrzeug-Gespann (1) zu erfassen (St0), wobei dazu
   - eine durch eine umgesetzte Lenkbewegung die Ausrichtung zwischen dem Zugfahrzeug (2) und dem Anhänger (3) charakterisierende Größe ($\alpha$, $\delta$, $\omega$, L) ermittelt wird, wobei die charakterisierende Größe ein Lenkwinkel ($\omega$) oder ein Lenkradwinkel ($\alpha$) unter Berücksichtigung eines Übersetzungsfaktors (L) oder ein Knickwinkel ($\delta$) zwischen dem Zugfahrzeug (2) und dem Anhänger (3) ist (St 1), **dadurch gekennzeichnet, dass**
   - in Abhängigkeit der ermittelten, die Ausrichtung zwischen dem Zugfahrzeug (2) und dem Anhänger (3) charakterisierenden Größe ($\alpha$, $\delta$, $\omega$, L) eine Stellgröße ($\beta$) bestimmt wird, mit der der Überwachungsraum (13) innerhalb des Erfassungsbereiches (12) durch eine Drehung verdreht und damit dynamisch angepasst wird (St2), so dass das geknickte Fahrzeug-Gespann (1) wiederum nicht im Überwachungsraum (13) liegt; und
   - Feststellen durch Bildverarbeitung, ob sich in dem Überwachungsraum (13) kritische Objekte (O) befinden, zum Vermeiden einer Kollision zwischen einem in der überwachten Fahrzeugumgebung (U) befindlichen riskanten Objekt (O) und dem eigenen Fahrzeug-Gespann (1) (St3).

2. Verfahren nach einem der vorhergehenden Ansprüche, **dadurch gekennzeichnet, dass** der Erfassungsbereich (12) gegenüber einem Befestigungspunkt (2, 3) der Kamera (11) am Fahrzeug-Gespann (1) festgehalten wird, wenn eine Verdrehung des Überwachungsraumes (13) um die Stellgröße (β) stattfindet.

3. Verfahren nach einem der vorhergehenden Ansprüche, **dadurch gekennzeichnet, dass** der Überwachungsraum (13) größenunverändert innerhalb des Erfassungsbereiches (12) verdreht wird, wobei der Überwachungsraum (13) dazu derartig festgelegt wird, dass der Überwachungsraum (13) sowohl bei einer Geradeausfahrt (G) als auch bei einer beliebigen Kurvenfahrt (K) oder bei einem beliebigen Abbiege-Vorgang (A) größenunverändert in den Erfassungsbereich (12) passt.

4. Verfahren nach einem der Ansprüche 1 oder 2, **dadurch gekennzeichnet, dass** der Überwachungsraum (13) innerhalb des Erfassungsbereiches (12) zusätzlich derartig festgelegt wird, dass der Überwachungsraum (13) bei einer Geradeausfahrt (G) vollständig im Erfassungsbereich (12) liegt und der Überwachungsraum (13) bei einer Verdrehung um die Stellgröße (β) um die Bereiche verkleinert wird, die bei einer Kurvenfahrt (K) oder bei einem Abbiege-Vorgang (A) infolge der Verdrehung des Überwachungsraumes (13) um die Stellgröße (β) nicht mehr innerhalb des Erfassungsbereichs (12) liegen.

5. Verfahren nach einem der vorhergehenden Ansprüche, **dadurch gekennzeichnet, dass** die Stellgröße (β) entgegengesetzt proportional zu der die Ausrichtung zwischen dem Zugfahrzeug (2) und dem Anhänger (3) charakterisierende Größe (α, δ, ω, L) ist zum Kompensieren einer veränderten Ausrichtung der Kamera (11) relativ zu der Fahrzeugumgebung (U) infolge einer Veränderung der Ausrichtung zwischen dem Zugfahrzeug (2) und dem Anhänger (3).

6. Verfahren nach einem der vorhergehenden Ansprüche, **dadurch gekennzeichnet, dass** die Stellgröße ein Drehwinkel (β) ist, um den der Überwachungsraum (13) innerhalb des Erfassungsbereiches (12) in Abhängigkeit der die Ausrichtung zwischen dem Zugfahrzeug (2) und dem Anhänger (3) charakterisierende Größe (α, δ, ω, L) verdreht wird.

7. Überwachungssystem (10) für ein Fahrzeug-Gespann (1) bestehend aus einem Zugfahrzeug (2) und mindestens einem Anhänger (3) zur Durchführung des Verfahrens nach einem der vorhergehenden Ansprüche, wobei das Überwachungssystem (10) eine Kamera (11) mit einem Erfassungsbereich (12) aufweist, wobei innerhalb des Erfassungsbereiches (12) der Überwachungsraum (13) als Teilbereich innerhalb des Erfassungsbereiches angeordnet ist, und wobei das Überwachungssystem (10) ausgebildet ist, den Überwachungsraum (13) auf kritische Objekte (O), von denen eine Kollisionswahrscheinlichkeit (W) ausgehen kann, zu überwachen,

wobei der Überwachungsraum (13) von einer Steuereinrichtung (14) des Überwachungssystems (10) derartig festlegbar und/oder veränderbar ist, dass die Fahrzeugumgebung (U) zumindest bereichsweise im Überwachungsraum (13) liegt und das Fahrzeug-Gespann (1), an dem das Überwachungssystem (10) angeordnet ist, nicht im Überwachungsraum (13) liegt, indem der Überwachungsraum (13) auf die Fahrzeugumgebung (U) seitlich des eigenen Fahrzeug-Gespanns (1) ausrichtbar ist, ohne dabei das eigene Fahrzeug-Gespann (1) zu erfassen (St0),
wobei dazu von der Steuereinrichtung (14) eine durch eine umgesetzte Lenkbewegung die Ausrichtung zwischen dem Zugfahrzeug (2) und dem Anhänger (3) charakterisierende Größe (α, δ, ω, L) ermittelbar ist und eine Stellgröße (β) des Überwachungsraumes (13) innerhalb des Erfassungsbereiches (12) in Abhängigkeit dieser die Ausrichtung zwischen dem Zugfahrzeug (2) und dem Anhänger (3) charakterisierende Größe (α, δ, ω, L) ermittelbar und einstellbar ist, **dadurch gekennzeichnet, dass**

- die Steuereinrichtung ausgelegt ist, in Abhängigkeit der ermittelten, die Ausrichtung zwischen dem Zugfahrzeug (2) und dem Anhänger (3) charakterisierenden Größe (a, d, w, L) eine Stellgröße (b) zu bestimmen, mit der der Überwachungsraum (13) innerhalb des Erfassungsbereiches (12) durch eine Drehung verdreht und damit dynamisch anpassbar ist, so dass das geknickte Fahrzeug-Gespann (1) wiederum nicht im Überwachungsraum (13) liegt; und
- das Überwachungssystem eine Bildverarbeitungseinheit aufweist, die feststellt, ob sich in dem Überwachungsraum (13) kritische Objekte (O) befinden, zum Vermeiden einer Kollision zwischen einem in der überwachten Fahrzeugumgebung (U) befindlichen riskanten Objekt (O) und dem eigenen Fahrzeug-Gespann (1) (St3).

8. Fahrzeug-Gespann (1), insbesondere Nutzfahrzeug-Gespann (1), bestehend aus einem Zugfahrzeug (2) und mindestens einem Anhänger (3) mit einem Überwachungssystem (10) nach Anspruch 7, **dadurch gekennzeichnet,**

**dass** der Überwachungsraum (13) auf die Fahrzeugumgebung (U) seitlich des eigenen Fahrzeug-Gespanns (1) ausgerichtet ist.

9. Fahrzeug-Gespann (1) nach Anspruch 8, **dadurch gekennzeichnet, dass** die Kamera (11) am Zugfahrzeug (2) oder am Anhänger (3) befestigt ist, vorzugsweise verdrehfest.

**Claims**

1. Method for monitoring vehicle surroundings (U) of a vehicle combination (1), in particular a commercial vehicle combination (1), consisting of a towing vehicle (2) and at least one trailer (3) using a monitoring system (10) having a camera (11), the method having at least the following steps:

   - defining a monitoring area (13) as a sub-region within a detection region (12) of the camera (11), the monitoring system (10) only monitoring the monitoring area (13) for critical objects (O) which can give rise to a collision probability (W), the monitoring area (13) being defined and aligned such that the vehicle surroundings (U) are located, at least in regions, in the monitoring area (13) and, at the same time, the vehicle combination (1) is not located in the monitoring area (13) in that the monitoring area (13) is aligned with the vehicle surroundings (U) to the side of the specific vehicle combination (1) without the specific vehicle combination (1) being detected (St0),
   - **for this purpose, a variable ($\alpha$, $\delta$, $\omega$, L) characterizing the alignment** between the towing vehicle (2) and the trailer (3) via a performed steering movement being determined, the characterizing variable being a steering angle ($\omega$) or a steering wheel angle ($\alpha$) taking into account a transmission factor (L) or an articulation angle ($\delta$) between the towing vehicle (2) and the trailer (3) (St1), characterized in that
   - **depending on the determined variable ($\alpha$, $\delta$, $\omega$, L) characterizing the** alignment between the towing vehicle (2) and the trailer (3), a manipulated **variable ($\beta$) is established, by which the monitoring area (13) is rotated within the** detection region (12) and thus dynamically adjusted (St2) so that the articulated vehicle combination (1) is again not located in the monitoring area (13); and
   - identifying, by means of image processing, whether critical objects (O) are located in the monitoring area (13) in order to avoid a collision between an object (O), which presents a risk and is located in the monitored vehicle surroundings (U), and the specific vehicle combination (1) (St3).

2. Method according to any of the preceding claims, **characterized in that** the detection region (12) is maintained with respect to an attachment point (2, 3) of the camera (11) on the vehicle combination (1) when the monitoring area (13) is **rotated by the manipulated variable ($\beta$).**

3. Method according to either of the preceding claims, **characterized in that** the monitoring area (13) is rotated within the detection region (12) without changing its size, the monitoring area (13) being defined such that the monitoring area (13) fits into the detection region (12) without changing its size both when driving straight ahead (G) and when cornering (K) or when turning (A).

4. Method according to either of claims 1 or 2, **characterized in that** the monitoring area (13) is additionally defined within the detection region (12) such that the monitoring area (13) is located completely within the detection region (12) when driving straight ahead (G) and the monitoring area (13) is reduced, when **rotating by the manipulated variable ($\beta$), by the regions which, when cornering (K)** or turning (A), are no longer located within the detection region (12) as a result of **the rotation of the monitoring area (13) by the manipulated variable ($\beta$).**

5. Method according to any of the preceding claims, **characterized in that** the manipulated variable ($\beta$) **is inversely proportional to the variable ($\alpha$, $\delta$, $\omega$, L)** characterizing the alignment between the towing vehicle (2) and the trailer (3) in order to compensate for a changed alignment of the camera (11) relative to the vehicle surroundings (U) as a result of a change in the alignment between the towing vehicle (2) and the trailer (3).

6. Method according to any of the preceding claims, **characterized in that the manipulated variable is an angle of rotation ($\beta$) by which the monitoring area** (13) is rotated **within the detection region (12) depending on the variable ($\alpha$, $\delta$, $\omega$, L)** characterizing the alignment between the towing vehicle (2) and the trailer (3).

7. Monitoring system (10) for a vehicle combination (1) consisting of a towing vehicle (2) and at least one trailer (3) for carrying out the method according to any of the preceding claims, the monitoring system (10) having a camera (11) having a detection region (12), the monitoring area (13) being arranged as a sub-region within the detection region (12), and the monitoring system (10) being designed to monitor the monitoring area (13) for critical objects (O) which can give rise to a collision probability (W), it being possible for the monitoring area (13) to be defined and/or changed by a control device (14) of the monitoring system (10) such that the vehicle surroundings (U) are located, at least in regions, in the monitoring area (13) and the vehicle combination (1) on which the monitoring system (10) is arranged is not located in the monitoring area (13) in that the monitoring area (13) can be aligned with the vehicle surroundings (U) to the side of the specific vehicle combination (1) without the specific vehicle combination (1) being detected (St0),

**for this purpose, it being possible for a variable ($\alpha$, $\delta$, $\omega$, L) characterizing** the alignment between the towing vehicle (2) and the trailer (3) via a performed steering movement to be determined by the control device (14) and a manipulated **variable ($\beta$) of the monitoring area (13) to be determined and set within the detection region (12) depending on this variable ($\alpha$, $\delta$, $\omega$, L) characterizing the** alignment between the towing vehicle (2) and the trailer (3), **characterized in that**

- the control device is designed, depending on the determined variable (a, d, w, L) characterizing the alignment between the towing vehicle (2) and the trailer (3), to establish a manipulated variable (b) by which the monitoring area (13) is rotated within the detection region (12) and thus can be dynamically adjusted so that the articulated vehicle combination (1) is again not located in the monitoring area (13); and
- the monitoring system has an image processing unit which identifies whether critical objects (O) are located in the monitoring area (13) in order to avoid a collision between an object (O), which presents a risk and is located in the monitored vehicle surroundings (U), and the specific vehicle combination (1) (St3).

8. Vehicle combination (1), in particular a commercial vehicle combination (1), consisting of a towing vehicle (2) and at least one trailer (3) and having a monitoring system (10) according to claim 7, **characterized in that** the monitoring area (13) is aligned with the vehicle surroundings (U) to the side of the particular vehicle combination (1).

9. Vehicle combination (1) according to claim 8, **characterized in that** the camera (11) is attached to the towing vehicle (2) or to the trailer (3), preferably non-rotatably.

**Revendications**

1. Procédé permettant de surveiller un environnement de véhicule (U) d'un ensemble de véhicules (1), en particulier d'un ensemble de véhicules utilitaires (1), constitué d'un véhicule tracteur (2) et d'au moins une remorque (3), à l'aide d'un système de surveillance (10) comportant une caméra (11), comportant au moins les étapes suivantes :

- définition d'un espace de surveillance (13) en tant que zone partielle à l'intérieur d'une zone de détection (12) de la caméra (11), dans lequel le système de surveillance (10) surveille uniquement l'espace de surveillance (13) pour détecter des objets (O) critiques dont peut émaner une probabilité de collision (W), dans lequel l'espace de surveillance (13) est défini et aligné de telle sorte que l'environnement de véhicule (U) se trouve au moins dans certaines zones dans l'espace de surveillance (13) et, de façon concomitante, l'ensemble de véhicules (1) ne se trouve pas dans l'espace de surveillance (13) du fait que l'espace de surveillance (13) est orienté vers l'environnement de véhicule (U), latéralement à l'ensemble de véhicules (1) de l'environnement de véhicule, sans détecter (St0) pour autant l'ensemble de véhicules (1) de celui-ci, dans lequel dans ce but
- une grandeur ($\alpha$, $\delta$, $\omega$, **L) caractérisant l'alignement entre le véhicule** tracteur (2) et la remorque (3) par un mouvement de direction converti est déterminée (St1), dans lequel la grandeur caractérisante est un angle de direction ($\omega$) **ou un angle de volant ($\alpha$) compte tenu d'un facteur de** démultiplication (L) ou d'un angle d'articulation ($\delta$) **entre le véhicule tracteur** (2) et la remorque (3), **caractérisé en ce que**,
- en fonction de la grandeur ($\alpha$, $\delta$, $\omega$, **L) déterminée caractérisant** l'alignement entre le véhicule tracteur (2) et la remorque (3), il est déterminé une grandeur de réglage ($\beta$) **suivant laquelle l'espace de surveillance** (13) à l'intérieur de la zone de détection (12) est tourné par une rotation et ainsi adapté (St2) dynamiquement, de sorte que l'ensemble véhicules (1) plié ne se trouve pas à nouveau dans l'espace de surveillance (13) ; et
- détermination (St3) par traitement d'image, établissant si des objets (O) critiques se trouvent dans l'espace de surveillance (13), afin d'éviter une collision entre un objet (O) à risque se trouvant dans l'environnement de véhicule (U) surveillé et l'ensemble de véhicules (1) de celui-ci.

2. Procédé selon l'une des revendications précédentes, **caractérisé en ce que** la zone de détection (12) est maintenue fixe par rapport à un point de fixation (2, 3) de la caméra (11) sur l'ensemble de véhicules (1) lorsqu'une rotation de l'espace de surveillance (13) se produit suivant la grandeur de réglage (β).

3. Procédé selon l'une des revendications précédentes, **caractérisé en ce que** l'espace de surveillance (13) est tourné sans modification de taille à l'intérieur de la zone de détection (12), dans lequel l'espace de surveillance (13) est fixé de telle sorte que l'espace de surveillance (13) s'adapte sans modification de taille dans la zone de détection (12), aussi bien lors d'un déplacement en ligne droite (G) que lors d'un déplacement en courbe (K) quelconque ou lors d'un processus de changement de direction (A) quelconque.

4. Procédé selon l'une des revendications 1 ou 2, **caractérisé en ce que** l'espace de surveillance (13) à l'intérieur de la zone de détection (12) est en outre défini de telle sorte que l'espace de surveillance (13) se trouve entièrement dans la zone de détection (12) lors d'un déplacement en ligne droite (G) et que, lors d'une rotation suivant la grandeur de réglage (β), **l'espace de surveillance** (13) est réduit autour des zones qui ne se trouvent plus à l'intérieur de la zone de détection (12) lors d'un trajet en courbe (K) ou lors d'un processus de changement de direction (A) à la suite de la rotation de l'espace de surveillance (13) suivant la grandeur de réglage (β).

5. Procédé selon l'une des revendications précédentes, **caractérisé en ce que** la grandeur de réglage (β) **est inversement** proportionnelle à la grandeur ($\alpha, \delta, \omega$, **L**) **caractérisant l'alignement entre le véhicule tracteur** (2) et la remorque (3) pour compenser un changement d'alignement de la caméra (11) par rapport à l'environnement de véhicule (U) à la suite d'un changement d'alignement entre le véhicule tracteur (2) et la remorque (3).

6. Procédé selon l'une des revendications précédentes, **caractérisé en ce que** la grandeur de réglage est un angle de rotation (β) **suivant** lequel l'espace de surveillance (13) à l'intérieur de la zone de détection (12) est tourné en fonction de la grandeur ($\alpha, \delta, \omega$, **L) caractérisant l'alignement entre le** véhicule tracteur (2) et la remorque (3).

7. Système de surveillance (10) pour un ensemble de véhicules (1) constitué d'un véhicule tracteur (2) et d'au moins une remorque (3) pour la mise en oeuvre du procédé selon l'une des revendications précédentes, dans lequel le système de surveillance (10) présente une caméra (11) comportant une zone de détection (12), dans lequel l'espace de surveillance (13) est disposé à l'intérieur de la zone de détection (12) en tant que zone partielle à l'intérieur de la zone de détection, et dans lequel le système de surveillance (10) est conçu pour surveiller dans l'espace de surveillance (13), des objets (O) critiques dont peut émaner une probabilité de collision (W),

dans lequel l'espace de surveillance (13) peut être fixé et/ou modifié par un dispositif de commande (14) du système de surveillance (10) de telle sorte que l'environnement de véhicule (U) se trouve au moins dans certaines zones dans l'espace de surveillance (13) et que l'ensemble de véhicules (1), sur lequel est disposé le système de surveillance (10), ne se trouve pas dans l'espace de surveillance (13) du fait que l'espace de surveillance (13) peut être orienté vers l'environnement de véhicule (U), latéralement à l'ensemble de véhicules (1) de l'environnement de véhicule, sans détecter (St0) pour autant l'ensemble de véhicules (1) de celui-ci, dans lequel dans ce but une grandeur ($\alpha, \delta, \omega$, **L**) **caractérisant** l'alignement entre le véhicule tracteur (2) et la remorque (3) par un mouvement de direction converti peut être déterminée par le dispositif de commande (14), et une grandeur de réglage (β) **de l'espace de surveillance** (13) peut être déterminée et réglée à l'intérieur de la zone de détection (12) en fonction de cette grandeur ($\alpha, \delta, \omega$, **L) caractérisant l'alignement entre le véhicule tracteur** (2) et la remorque (3), **caractérisé en ce que**

- le dispositif de commande est configuré pour déterminer, en fonction de la grandeur (a, d, w, L) déterminée caractérisant l'alignement entre le véhicule tracteur (2) et la remorque (3), une grandeur de réglage (b) suivant laquelle l'espace de surveillance (13) peut être tourné par une rotation à l'intérieur de la zone de détection (12) et être ainsi adapté de manière dynamique, de sorte que l'ensemble de véhicules (1) plié ne se trouve pas à nouveau dans l'espace de surveillance (13) ; et
- le système de surveillance présente une unité de traitement d'images qui détermine (St3) si des objets (O) critiques se trouvent dans l'espace de surveillance (13), afin d'éviter une collision entre un objet (O) à risque se trouvant dans l'environnement de véhicule (U) surveillé et l'ensemble de véhicules (1) de celui-ci.

8. Ensemble de véhicules (1), en particulier ensemble de véhicules utilitaires (1), constitué d'un véhicule tracteur (2) et d'au moins une remorque (3), comportant un système de surveillance (10) selon la revendication 7, **caractérisé en ce que** l'espace de surveillance (13) est orienté vers l'environnement de véhicule (U), latéralement à l'ensemble de véhicules (1) de celui-ci.

9. Ensemble de véhicules (1) selon la revendication 8,
   **caractérisé en ce que** la caméra (11) est fixée, de préférence de manière solidaire en rotation, au véhicule tracteur (2) ou à la remorque (3).

**Fig. 1**

**Fig. 2**

**Fig. 3**

**Fig. 4**

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 29818214 U1
- DE 102006026898 A1
- EP 1245445 B1
- US 3689695 A
- DE 10351655 A1

- DE 102011116822 A1
- EP 2786347 A1
- DE 102010032411 A1
- EP 1114750 A2